Europäisches Patentamt

European Patent Office

Office européen des brevets

(19)

(11) Numéro de publication : **0 496 679 B1**

## (12) FASCICULE DE BREVET EUROPEEN

(45) Date de publication du fascicule du brevet :
05.04.95 Bulletin 95/14

(51) Int. Cl.⁶ : **H02M 3/28**

(21) Numéro de dépôt : **92400197.7**

(22) Date de dépôt : **24.01.92**

(54) **Dispositif pour obtenir une tension continue à faible ondulation résiduelle.**

(30) Priorité : **25.01.91 FR 9100876**

(43) Date de publication de la demande :
**29.07.92 Bulletin 92/31**

(45) Mention de la délivrance du brevet :
**05.04.95 Bulletin 95/14**

(84) Etats contractants désignés :
**DE NL**

(56) Documents cités :
**EP-A- 0 192 553**
**EP-A- 0 347 322**
**PATENT ABSTRACTS OF JAPAN, vol. 11, no.
249 (E-532)(2696) 13 Août 1987 & JP-A-62 61
298**

(73) Titulaire : **GENERAL ELECTRIC CGR S.A.
100, rue Camille-Desmoulins
F-92130 Issy les Moulineaux (FR)**

(72) Inventeur : **Ernest, Philippe, Cabinet
Ballot-Schmit
7, rue Le Sueur
F-75116 (FR)**
Inventeur : **Piernot, Philippe, Cabinet
Ballot-Schmit
7, rue Le Sueur
F-75116 (FR)**

(74) Mandataire : **Ballot, Paul Denis Jacques et al
Cabinet Ballot-Schmit,
7, rue Le Sueur
F-75116 Paris (FR)**

## Description

L'invention concerne un dispositif pour obtenir une tension continue à faible ondulation résiduelle et, notamment, pour obtenir une haute tension continue à appliquer entre la cathode et l'anode d'un tube à rayons X.

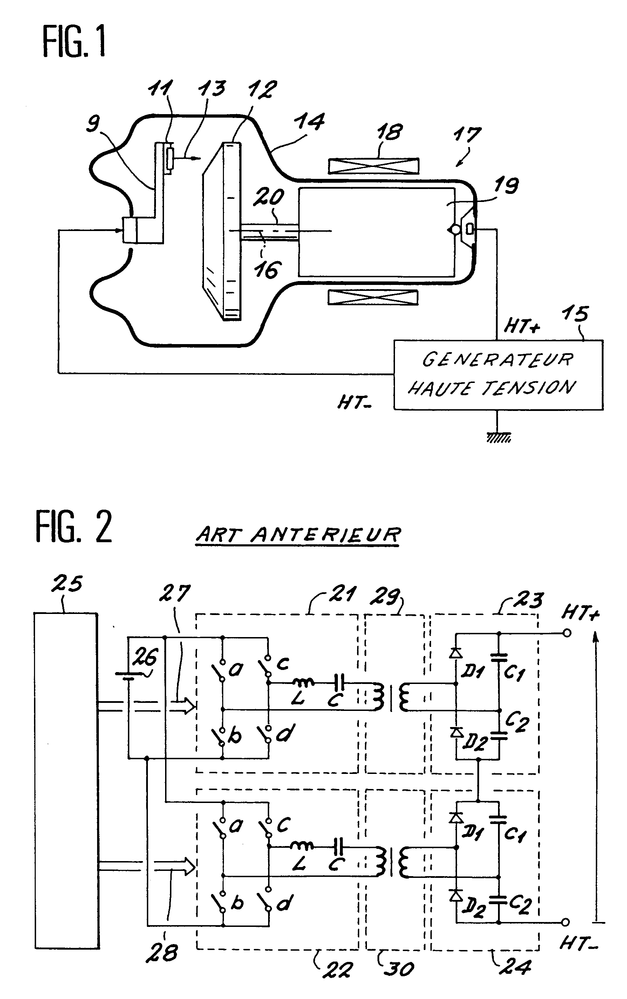

Les tubes à rayons X, pour diagnostic médical par exemple, sont généralement constitués (figure 1) comme une diode, c'est-à-dire avec une cathode 11 et une anode 12 ou anti-cathode, ces deux électrodes étant enfermées dans une enveloppe 14 étanche au vide et qui permet de réaliser l'isolement électrique entre ces deux électrodes. La cathode 11 produit un faisceau d'électrons 13 et l'anode 12 reçoit ces électrons sur une petite surface qui constitue un foyer d'où sont émis les rayons X.

Quand la haute tension d'alimentation est appliquée par un générateur 15 aux bornes de la cathode 11 et de l'anode 12 de façon que la cathode soit au potentiel négatif HT-, un courant dit courant anodique s'établit dans le circuit au travers du générateur 15 produisant la haute tension d'alimentation; le courant anodique traverse l'espace entre la cathode et l'anode sous la forme du faisceau d'électrons 13 qui bombardent le foyer.

Les caractéristiques des rayons X émis par le tube dépendent de nombreux paramètres et l'un d'entre eux est la valeur de la haute tension qui lui est appliquée, cette haute tension devant être réglable pour obtenir la caractéristique recherchée et devant rester constante pendant toute la durée de la pose radiologique pour ne pas modifier les caractéristiques de fonctionnement d'un récepteur de rayons X qui reçoit les rayons X ayant traversé l'objet en cours d'examen.

En outre, il est important que le temps de montée du front avant de l'impulsion et le temps de descente du flanc arrière soient faibles vis-à-vis de la durée de ladite impulsion.

Les dispositifs pour obtenir une haute tension continue réglable sont connus et sont basés sur le redressement et le filtrage d'une tension alternative, cette tension alternative étant fournie soit par le réseau à 50/60 hertz, soit par un circuit onduleur fonctionnant à une fréquence généralement supérieure à dix kilohertz. S'agissant d'un redressement et filtrage d'une tension alternative, on comprend que la haute tension continue présente une ondulation résiduelle dont la fréquence est liée à la tension alternative de base et dont l'amplitude varie d'un dispositif à l'autre selon son type de fonctionnement. Par ailleurs, le front avant et le flanc arrière des impulsions haute tension sont d'autant plus raides que le filtrage est faible.

Ainsi, dans le cas du redressement et filtrage de la tension alternative du réseau, on obtient un taux d'ondulation (TO) défini comme le rapport

$$TO = \frac{V_{max} - V_{min}}{V_{max}}$$

de 13,5% après redressement et filtrage de six tensions alternatives déphasées et de 3,4% après redressement et filtrage de douze tensions alternatives déphasées.

Pour diminuer ce taux d'ondulation, il est connu de réguler la tension continue filtrée à l'aide de tubes électroniques, telles que triodes ou tétrodes, qui doivent pouvoir supporter les hautes tensions et qui sont en général volumineux et coûteux. On obtient un taux d'ondulation qui est voisin de zéro.

Dans le cas d'un dispositif avec circuit onduleur, le taux d'ondulation dépend du filtrage mais ce dernier est d'autant plus efficace et plus facile à réaliser que la fréquence est élevée. Aussi, de plus en plus, les dispositifs d'obtention d'une haute tension continue sont du type à onduleurs.

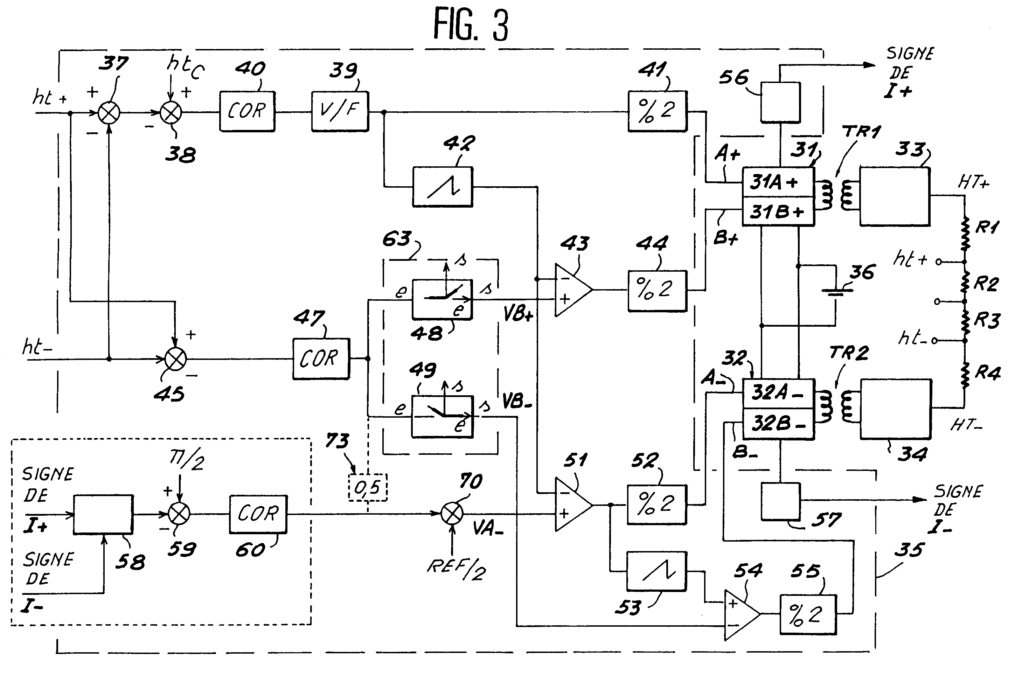

La figure 2 est un schéma fonctionnel de principe d'un générateur du type à deux circuits onduleurs fournissant une haute tension symétrique par rapport au potentiel de la terre comme connu de EP-A-0 347 322. Les deux hautes tensions symétriques HT+ et HT- sont obtenues par deux dispositifs identiques qui comportent chacun un circuit onduleur 21 ou 22 et un circuit de redressement et filtrage 23 ou 24, généralement multiplieur de tension, connecté par un transformateur d'isolement 29 ou 30.

Un circuit de commande 25, commun aux deux circuits onduleurs, fournit, sur les conducteurs multiples 27 et 28 les signaux de commande à une fréquence F des circuits onduleurs 21 et 22 de sorte que ces derniers fonctionnent en synchronisme. Afin que la somme des tensions HT+ et HT- ait un faible taux d'ondulation, les signaux sur les conducteurs multiples 27 et 28 sont en quadrature de phase.

Dans les rectangles 21 et 22, on a représenté le circuit onduleur sous une forme schématique qui comprend quatre interrupteurs a, b, c et d, et un circuit résonnant constitué d'une inductance L et d'un condensateur C. Dans les rectangles 23 et 24, on a représenté le circuit de redressement et filtrage sous forme schématique qui comprend un circuit de redressement doubleur de tension constitué des diodes $D_1$ et $D_2$ et d'un circuit de filtrage constitué des condensateurs $C_1$ et $C_2$.

Les circuits onduleurs 21 et 22 sont alimentés par une même source de tension symbolisée par une batterie 26.

Le générateur qui vient d'être décrit succinctement en relation avec la figure 2 présente les inconvénients suivants. Les deux dispositifs de génération des tensions HT+ et HT- ne peuvent pas être identiques car leurs composants réactifs de puissance ne peuvent avoir des valeurs rigoureusement égales de sorte qu'il en résulte des variations des tensions HT+ et HT-; par ailleurs, les ondulations résiduelles des tensions HT+ et HT- ne restent pas en opposition de phase de manière à obtenir un taux d'ondulation car, d'une part, les impédances des circuits d'application des tensions HT+ à l'anode et HT- à la cathode ne sont pas identiques, et d'autre part, les impédances du tube, anode-terre et cathode-terre, peuvent être différentes selon la construction du tube (enveloppe 14 en métal ou en verre), d'où un déphasage par rapport à l'opposition de phase qui est recherchée.

Un but de la présente invention est donc de mettre en oeuvre un dispositif pour obtenir une tension continue présentant une faible ondulation résiduelle quelles que soit le déséquilibre des valeurs des composants du dispositif lui-même et de la charge.

L'invention concerne un dispositif pour obtenir une tension continue à faible ondulation résiduelle comportant un premier et un second circuits onduleurs fonctionnant en synchronisme à une fréquence F supérieure à leurs fréquences de résonance $F_0$, voisines mais non rigoureusement égales, un premier et second circuits de redressement et de filtrage, et un premier et un second transformateurs pour connecter respectivement les premier et second circuits onduleurs aux premier et second circuits de redressement et filtrage, ces derniers étant connectés entre eux et par rapport à la masse pour fournir le premier une tension HT+ et le deuxième une tension HT-, caractérisé en ce que les premier et second circuits onduleurs sont commandés par un circuit de commande qui comprend :

- des premiers moyens pour faire varier la fréquence F des signaux de commutation des premier et second circuits onduleurs de manière que la somme des valeurs absolues des tensions HT+ et HT- soit constante,
- des deuxièmes moyens pour faire varier la phase des signaux de commutation appliqués au premier ou au second circuit onduleur de manière que la différence des valeurs absolues des tensions HT+ et HT- soit nulle, et
- des troisièmes moyens pour faire varier la phase des signaux appliqués au second circuit onduleur de manière que la différence des phases des courants circulant dans les premier et second circuits onduleurs soit égale à 90°.

D'autres buts, caractéristiques et avantages de la présente invention apparaîtront à la lecture de la description suivante d'un exemple particulier de réalisation, ladite description étant faite en relation avec les dessins joints dans lesquels :

- la figure 1 est une vue en coupe schématique d'un tube à rayons X auquel s'applique plus particulièrement le dispositif selon l'invention,
- la figure 2 est un schéma d'un dispositif d'obtention d'une haute tension pour tube à rayons X selon l'art antérieur,
- la figure 3 est un schéma fonctionnel du dispositif selon l'invention,
- la figure 4 est un schéma détaillé d'un ensemble onduleur/circuit de redressement et filtrage correspondant aux circuits 31 et 33 ou 32 et 34 du schéma de la figure 3,
- les figures 5-a à 5-m sont des diagrammes temporels de signaux qui permettent de comprendre le fonctionnement du dispositif selon l'invention.

Par rapport au dispositif de la figure 2, qui correspond à l'art antérieur, l'invention consiste à effectuer
- une première régulation pour que la somme des tensions HT+ et HT- soit constante et égale à une valeur de consigne,
- une deuxième régulation pour que la différence des tensions HT+ et HT- soit nulle, et
- une troisième régulation pour que le déphasage entre les courants circulant dans le circuit onduleur d'anode et dans le circuit onduleur de cathode soit égal à 90°, c'est-à-dire que les courants soient en quadrature.

Cette condition de quadrature des courants provient du fait que si l'on additionne des courants provenant du redressement double alternance de signaux sunusoïdaux de même fréquence, l'ondulation résiduelle qui résulte de leur addition est minimale lorsque les courants sont en quadrature de phase.

Pour effectuer ces trois régulations, les circuits onduleurs 21 et 22 de la figure 2 sont commandés par des signaux présentant entre eux des déphasages dont la valeur dépend du résultat de comparaisons entre les signaux correspondant aux hautes tensions obtenues HT+ et HT- et aux courants qui circulent dans les circuits onduleurs.

Conformément à la figure 3, le dispositif selon l'invention comprend un premier circuit onduleur 31 qui, associé à un premier circuit de redressement et filtrage 33 par l'intermédiaire d'un transformateur d'isolement TR1, fournit une haute tension positive HT+ par rapport à la masse et un deuxième circuit onduleur 32 qui, associé à un deuxième circuit de redressement et filtrage 34, par l'intermédiaire d'un deuxième transformateur d'isolement TR2, fournit une haute tension négative HT- par rapport à la masse. Les deux circuits onduleurs 31 et 32 sont connectés à une source de tension continue matérialisée par une batterie 36. Comme on l'a indiqué dans le préambule en relation avec les figures 1 et 2, la haute tension positive HT+ est appliquée à l'anode du tube à rayons X et la haute tension négative HT- est appliquée à la cathode dudit tube.

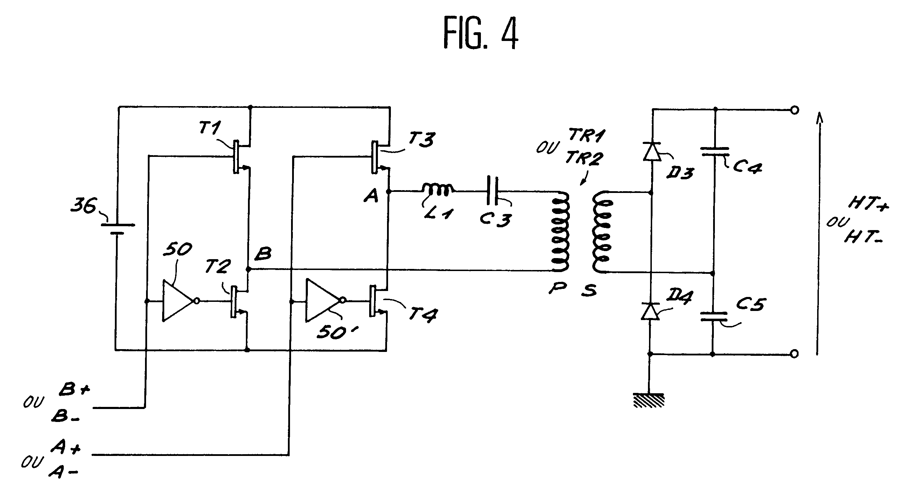

La figure 4 est un schéma détaillé d'un ensemble circuit onduleur (31 ou 32), transformateur d'isolement (TR1 ou TR2) et circuit de redressement et filtrage (33 ou 34) analogue à celui de la figure 2. Chaque circuit onduleur 31 ou 32 comprend quatre transistors $T_1$, $T_2$, $T_3$ et $T_4$ qui sont, par exemple, à effet de champ réalisés dans la technologie métal-oxyde, plus connus sous l'abréviation anglo-saxonne de transistors MOSFET. Les deux transistors $T_1$ et $T_2$ sont connectés en série entre la borne positive et la borne négative de la source d'alimentation continue 36 de manière que le drain du transistor $T_1$ est connecté à la borne positive tandis que la source du transistor $T_2$ est connectée à la borne négative. De même, les deux transistors $T_3$ et $T_4$ sont connectés en série entre la borne positive et la borne négative de la source d'alimentation continue 36 de manière que le drain du transistor $T_3$ est connecté à la borne positive tandis que la source du transistor $T_4$ est connectée à la borne négative.

Le point commun A des transistors $T_3$ et $T_4$ est connecté à une première borne d'un enroulement primaire P du transformateur d'isolement TR1 ou TR2 par l'intermédiaire d'un circuit résonnant qui comporte une inductance $L_1$ et un condensateur $C_3$. Le point commun B des transistors $T_1$ et $T_2$ est connecté directement à la deuxième borne de l'enroulement primaire P du transformateur TR1 ou TR2.

Les électrodes de commande des transistors $T_1$ à $T_4$ de chaque circuit onduleur 31 ou 32 sont commandées par des signaux fournis par un circuit de commande 35 comportant quatre bornes de sortie A+, B+, A- et B-.

Ainsi, les électrodes de commande des transistors $T_1$ et $T_2$ (circuit 31B+) sont pilotées par une borne de sortie B+ du dispositif de commande 35 lorsqu'il s'agit de l'onduleur 31 correspondant à la haute tension positive HT+ et par une borne de sortie B- du dispositif de commande 35 lorsqu'il s'agit de l'onduleur 32 correspondant à la haute tension négative HT-.

De manière semblable, les électrodes de commande des transistors $T_3$ et $T_4$ (circuit 31A+ ou 32A-) sont pilotées par une borne de sortie A+ du dispositif de commande 35 lorsqu'il s'agit de l'onduleur 31 correspondant à la haute tension positive HT+ et par une borne de sortie A- du dispositif de commande 35 lorsqu'il s'agit de l'onduleur 32 correspondant à la haute tension négative HT-.

Les signaux de commande sont appliqués directement aux électrodes de commande des transistors $T_1$ et $T_3$ mais par l'intermédiaire des circuits inverseurs 50 et 50′ en ce qui concerne les électrodes de commande des transistors $T_2$ et $T_4$.

Une première borne de l'enroulement secondaire S du transformateur $T_1$ est connectée au point commun de deux diodes de redressement $D_3$ et $D_4$ connectées en série tandis que la deuxième borne dudit enroulement S est connectée au point commun de deux condensateurs de filtrage $C_4$ et $C_5$ connectés en série.

La cathode de la diode $D_3$ est connectée à l'autre borne du condensateur $C_4$ tandis que l'anode de la diode $D_4$ est connectée à l'autre borne du condensateur $C_5$. La haute tension HT+ (ou HT-) est prise entre les bornes extrêmes des condensateurs $C_4$ et $C_5$.

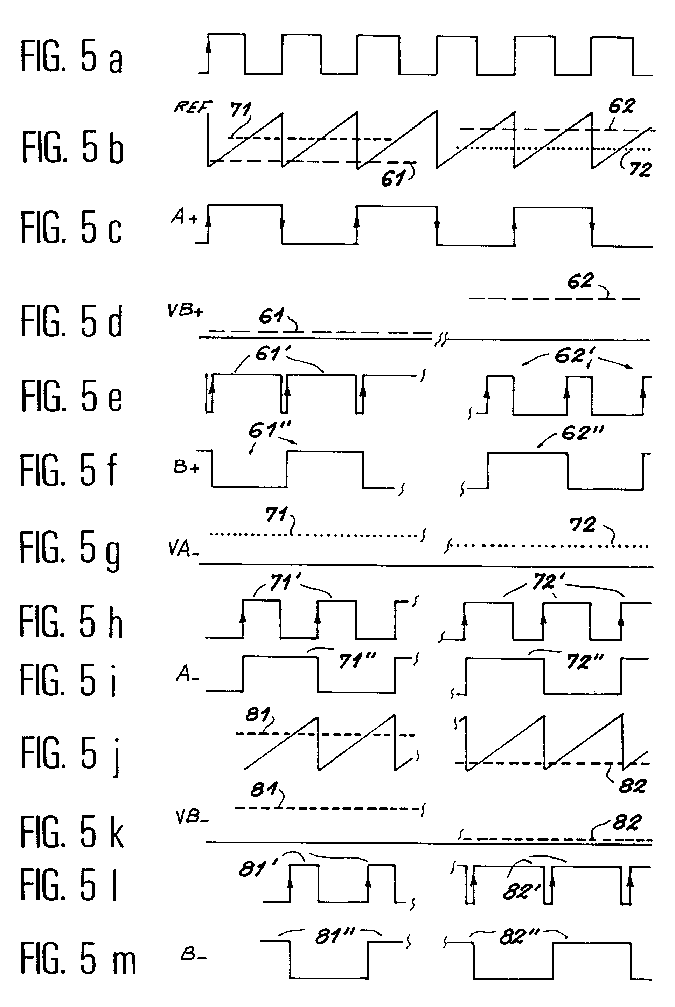

Dans un tube à rayons X, il est important que la différence entre les potentiels d'anode et de cathode soit égale à une valeur déterminée $HT_C$ dite de consigne. A cet effet, des tensions ht+ et ht- qui sont proportionnelles respectivement à HT+ et HT- par l'utilisation de ponts diviseurs résistifs R1, R2 et R3, R4, sont additionnées en valeur absolue dans un circuit additionneur 37 puis leur somme est comparée à une valeur $ht_c$, dite de consigne et proportionnelle à $HT_C$, dans un circuit soustracteur 38. La tension de sortie du circuit soustracteur 38 est appliquée à un circuit convertisseur tension/fréquence 39 par l'intermédiaire d'un circuit correcteur de niveau 40. Ce convertisseur 39 fournit un signal rectangulaire dont la fréquence varie en fonction de la tension qui lui est appliquée. Si F désigne la fréquence choisie pour la commutation des interrupteurs des onduleurs 31 et 32, la fréquence du signal de sortie du convertisseur 39 sera égale à 2F. Ce signal de fréquence 2F est représenté par le diagramme temporel de la figure 5-a.

Le circuit correcteur de niveau 40 a pour but d'agir sur la fréquence 2F pour maintenir le signal de sortie du comparateur à la valeur zéro.

Le signal à la fréquence 2F, fourni par le convertisseur 39, est appliqué à l'entrée de la partie 31A+ du circuit onduleur 31 par l'intermédiaire d'un circuit diviseur 41 qui divise par deux la fréquence du signal qui lui est appliqué. La figure 5-c donne le diagramme temporel de ce signal que l'on appellera aussi A+ comme la borne de sortie correspondante du circuit 35.

Le signal à la fréquence 2F, fourni par le convertisseur 39 est également appliqué à un circuit 42 qui fournit un signal en forme de dent de scie (figure 5-b) qui varie entre zéro et une amplitude constante REF indépendante de la fréquence F et qui est synchronisé avec le front avant des impulsions du signal de fréquence 2F. Ce signal en dent de scie est appliqué à une entrée inverseuse des deux bornes d'entrée d'un premier comparateur 43 et d'un deuxième comparateur 51 pour être comparé à des signaux dont l'un est représentatif de la différence des hautes tensions HT+ et HT- en valeur absolue (comparateur 43) et dont l'autre est représentatif du déphasage entre les courants I+ et I-circulant respectivement dans les circuits onduleurs 31 et 32.

Le signal représentatif de la différence des hautes tensions HT+ et HT- est obtenu en appliquant les signaux ht+ et ht- à un circuit soustracteur 45 de manière à obtenir la différence de leurs valeurs absolues. Le niveau de ce signal est corrigé par un circuit correcteur 47 avant d'être appliqué à un circuit d'aiguillage 63 qui dirige le signal vers le premier circuit comparateur 43 ou vers un troisième circuit comparateur 54 selon que le signal d'écart à la sortie du circuit soustracteur 45 est positif ou négatif.

Le circuit d'aiguillage 63 comporte un premier circuit de seuil 48 qui ne fournit un signal VB+ positif que si la signal d'écart est positif et un deuxième circuit de seuil 49, similaire au premier, mais qui ne fournit un signal positif que si le signal d'écart est négatif.

Dans les rectangles 48 et 49, on a représenté symboliquement la relation qui lie le signal de sortie s (en ordonnée) au signal d'entrée e (en abscisse) sous la forme d'une courbe en trait accentué.

Sur la figure 5-d, on a représenté deux valeurs du signal VB+ par exemple, l'une 61 de très faible valeur et l'autre 62 de valeur plus élevée.

Le signal de sortie VB+ du circuit de seuil 48 est appliqué à l'entrée non inverseuse du circuit comparateur 43 dont l'entrée inverseuse reçoit donc le signal en dent de scie (figure 5-b) fourni par le circuit générateur 42.

Le résultat de la comparaison conduit à un signal dont la forme est donnée par les diagrammes 61′ et 62′ de la figure 5-e.

Ce signal est appliqué à un circuit diviseur 44 identique au diviseur 41 dont le signal de sortie appelé B+, est déphasé par rapport au signal A+ d'un angle représentatif de la valeur de VB+ et est appliqué à la borne d'entrée de la partie 31B+ du circuit onduleur 31. L'examen des signaux A+ et B+ des figures 5-c et 5-f montre qu'ils sont sensiblement en opposition de phase lorsque VB+ est voisin de zéro, et qu'ils sont sensiblement en phase lorsque VB+ est à sa valeur maximale, c'est-à-dire lorsque la valeur absolue de HT+ est très supérieure à celle de HT-. Pour qu'il en soit ainsi, les circuits diviseurs 41 et 44 doivent être prépositionnés à chaque démarrage.

Pour tenir compte des déphasages entre les courants circulant dans les onduleurs 31 et 32 l'invention propose de mesurer ces déphasages, puis de les comparer de manière à obtenir un signal de modification des phases des signaux de commande A- et B- du circuit onduleur 32.

Ceci est obtenu en utilisant un premier détecteur 56 du signe du courant I+ circulant dans le premier circuit onduleur 31 et un deuxième détecteur 57, identique au détecteur 56, du signe du courant I- circulant dans le deuxième circuit onduleur 32. Les signaux fournis par les détecteurs 56 et 57 sont appliqués à un circuit de type OU exclusif et de filtrage 58 qui fournit un signal représentatif de la différence de phases $[\Phi(I+)-\Phi(I-)]$, lequel signal est comparé dans un circuit soustracteur 59 à un signal de consigne représentatif d'une différence de phase $[\Phi(I+) -\Phi(I-)] = \pi/2$

La borne de sortie du circuit comparateur 59 est connectée à un circuit correcteur de niveau 60 dont la borne de sortie est connectée à une première borne d'entrée d'un circuit additionneur 70 dont la deuxième borne d'entrée reçoit un signal de référence REF/2 égal à la valeur moyenne du signal en dent de scie fourni par le générateur 42 (diagramme de la figure 5-b). La borne de sortie du circuit 70 est connectée à la borne d'entrée non inverseuse du comparateur 51 dont l'autre borne d'entrée inverseuse est connectée à la borne de sortie du générateur 42. Le signal de sortie du circuit additionneur 70, référencé VA-, est représenté par le diagramme temporel de la figure 5-g suivant deux valeurs 71 et 72, l'une 71 correspondant à la moitié de l'amplitude de la dent de scie et l'autre 72 à une valeur inférieure à cette moitié.

Le circuit comparateur 51 effectue la comparaison de ces deux signaux pour fournir le signal représenté par le diagramme 71′ pour le signal 71 et par le diagramme 72′ pour le signal 72 (figure 5-h). Le front de montée de ce signal est donc modulé en phase par rapport au signal A+.

La borne de sortie du circuit comparateur 51 est connectée, d'une part, à un circuit diviseur de fréquence 52, identique aux circuits diviseurs 41 et 44 et, d'autre part, à un deuxième circuit générateur 53 de tension en dent de scie, analogue au premier circuit générateur 42. Le circuit 52 effectue une division par deux de la fréquence du signal qui lui est appliqué et fournit un signal 71″ et un signal 72″ (Figure 5-i), selon la valeur 71 ou 72 du signal VA-.

Lorsque VA- est égal à REF/2 (signal 71), c'est-à-dire lorsque les phases des courants I+ et I- sont en quadrature, le signal 71″ de A- est en quadrature par rapport au signal A+ (Figure 5-c). Lorsque VA- est différent de la valeur REF/2 (signal 72), c'est-à-dire lorsque les phases des courants I+ et I- ne sont pas en quadrature, le signal de commande 72″ est décalé par rapport à la position en quadrature, c'est-à-dire par rapport à la position du signal 71″.

Le circuit générateur 53 fournit une tension en dent en scie qui est synchronisé sur le signal A- comme le montre le diagramme temporel de la figure 5-j. La borne de sortie du circuit générateur 53 est connecté à la borne d'entrée non inverseuse d'un troisième circuit comparateur 54 dont la borne d'entrée inverseuse est connectée à la borne de sortie du circuit 49.

Le circuit 49 fournit, par exemple, un signal VB- semblable au signal VB+ mais correspondant à une valeur négative à la sortie du circuit 47.

Ainsi, il fournit un signal 81 (figures 5-i et 5-k) de valeur élevée lorsque cette borne de sortie est négative et un signal 82 de valeur pratiquement nulle lorsque cette borne de sortie est voisine de zéro. Sur la borne de sortie du circuit comparateur 54, on obtient respectivement un signal 81' et un signal 82' (figure 5-l) dont le front de montée est modulé en phase par rapport au signal A-. La borne de sortie du circuit comparateur 54 est connectée à la borne d'entrée d'un circuit diviseur 55, identique aux circuits diviseurs 41, 44 et 52, qui fournit un signal 81" (figure 5-m) pour VB- correspondant au signal 81 et 82" pour VB- correspondant au signal 82. Les diagrammes de la figure 5-l montrent que le signal 82" de B- est en opposition de phase par rapport au signal correspondant de A- lorsque la borne de sortie du circuit 49 est nulle tandis que le signal 81" de B- est décalé par rapport à cette opposition de phase lorsque la borne de sortie du circuit 49 est positive.

Pour qu'il y ait ce déphasage des signaux A- et B-, il faut prépositionner les circuits diviseurs 52 et 55 à chaque démarrage.

En résumé, la différence de potentiels entre cathode et anode est maintenue constante en faisant varier la fréquence du circuit convertisseur 39. Les tensions HT+ et HT- sont maintenues égales en faisant varier la phase des signaux B+ et B- par rapport aux signaux A+ et A-respectivement, par exemple B+ lorsque HT+ est supérieur à HT- et B- lorsque HT- est supérieur à HT+.

Pour maintenir les courants I+ et I- en quadrature, on n'agit que sur un seul circuit onduleur, par exemple le circuit onduleur 32, en déphasant les signaux A- et B- d'une même quantité par rapport au signal A+.

Dans le dispositif qui vient d'être décrit, on a choisi comme signal de référence, celui qui est appliqué au circuit onduleur 31 mais il est clair que l'on aurait pu choisir le signal appliqué au circuit onduleur 32 comme référence. De même, dans chaque circuit onduleur 31 ou 32, on peut inverser les signaux de commande A+ et B+, d'une part, et A- et B- d'autre part. Dans le cas où l'on ne souhaite pas réaliser l'asservissement de la quadrature des courants I+ et I-, il est possible de simplifier le dispositif de la figure 3 en supprimant les éléments 56 et 57' et en remplaçant les éléments 58, 59 et 60 par un circuit 73 (en pointillé) entre la borne de sortie du circuit correcteur 47 et la borne d'entrée du circuit additionneur 70 qui est normalement connectée à la borne de sortie du circuit correcteur 60.

En effet, si les éléments résonants désignés par $L_1$ et $C_3$ sur la figure 4 ont des valeurs suffisamment proches pour les circuits onduleurs 31 et 32 pour être considérés comme identiques, alors les déphasages entre le courant I+ et le fondamental de la tension (VAB)+ d'une part, et entre le courant I- et le fondamental de la tension (VAB)- d'autre part, sont pratiquement égaux, même si les impédances côté anode et côté cathode sont déséquilibrées.

Dans ce cas, le signal qui apparaît à la sortie du circuit 47 qui règle les déphasages entre A+ et B+ d'une part et A- et B- d'autre part peut être utilisé pour mettre en quadrature les fondamentaux de (VAB)+ et (VAB)-.

Plus précisément, si l'on suppose que I+ et I- sont déphasés de la même valeur par rapport aux fondamentaux des signaux (VAB)+ et (VAB)- à la fréquence fondamentale apparaissant entre les points A et B (figure 4) des circuits onduleurs 31 et 32, on peut écrire , si le circuit 73 est absent :

$$\text{phase de A-} = \text{phase de A+} + \pi/2$$

$$\text{et} \left( \begin{array}{l} (\text{ phase de B+} = \text{phase de A+} + \pi{-}\Phi \text{ )} \\[6pt] (\text{ phase de B-} = \text{phase de A-} + \pi \text{ )} \end{array} \right. \quad \begin{array}{l} \text{si la sortie du} \\ \text{circuit 47 est} \\ \text{positive} \end{array}$$

$$\text{ou} \left( \begin{array}{l} (\text{ phase de B+} = \text{phase de A+} + \pi \text{ )} \\[6pt] (\text{ phase de B-} = \text{phase de A-} + \pi{-}\Phi \text{ )} \end{array} \right. \quad \begin{array}{l} \text{si la sortie du} \\ \text{circuit 47 est} \\ \text{négative} \end{array}$$

On en déduit pour les phases des fondamentaux :
   phase de (VAB)- = phase de (VAB)+ + $\pi/2 {-} \Phi/2$
et donc

phase de I- = phase de I+ + $\pi/2$-$\Phi/2$

La phase $\Phi$ est obtenue par le signal de sortie du circuit 47 et on peut donc, par un circuit multiplicateur 73 de coefficient 0,5, multiplier le signal de sortie du circuit 47 par 0,5 pour obtenir le signal VA- et rétablir l'égalité :

phase de I- = phase de I+ + $\pi/2$

**Revendications**

1. Dispositif pour obtenir une tension continue à faible ondulation résiduelle comportant un premier et un second circuits onduleurs (31, 32) fonctionnant en mode hyperrésonant de fréquence F supérieure à la fréquence de résonance, un premier et second circuits de redressement et de filtrage (33, 34), et un premier et un second transformateurs (TR1, TR2) pour connecter respectivement les premier et second circuits onduleurs (31, 32) aux premier et second circuits de redressement et filtrage (33, 34), lesdits premier et second circuits de redressement et filtrage (33, 34) étant connectés entre eux et par rapport à la masse pour fournir le premier une tension HT+ et le deuxième une tension HT-, caractérisé en ce que les premier et second circuits onduleurs (31, 32) sont commandés par un circuit de commande (35) qui comprend :
   - des premiers moyens (37, 38, 39, 40) pour faire varier la fréquence F des signaux de commutation des premier (31) et second (32) circuits onduleurs de manière que la somme des valeurs absolues des tensions HT+ et HT-soit constante,
   - des deuxième moyens (43, 45 à 50, 54) pour faire varier la phase des signaux de commutations appliqués au premier (31) ou au second (32) circuit onduleur de manière que la différence des valeurs absolues des tensions HT+ et HT- soit nulle, et
   - des troisièmes moyens (51, 58, 59, 60, 70 ou 70, 73) pour faire varier la phase des signaux appliqués au second circuit onduleur de manière que la différence des phases des courants circulent dans les premier (31) et second (32) circuits onduleurs soit égale à 90°.

2. Dispositif selon la revendication 1, caractérisé en ce que les premiers moyens comprennent :
   - un circuit de mesure (R1, R2, R3, R4) de tensions ht+ et ht- qui sont proportionnelles à HT+ et HT-,
   - un circuit additionneur (37) des valeurs absolues des tensions ht+ et ht-,
   - un circuit comparateur (38) de la tension fournie par le circuit additionneur (37) à une tension de référence $ht_c$ correspondant à la somme des tensions HT+ +HT- à obtenir
   - un circuit correcteur de niveau (40), et
   - un circuit convertisseur tension/fréquence (39) fournissant un signal de fréquence 2F.

3. Dispositif selon la revendication 2, caractérisé en ce que les deuxièmes moyens comprennent :
   - un circuit soustracteur (45) des valeurs absolues des tensions ht+ et ht-,
   - un circuit correcteur de niveau (47) et
   - un circuit d'aiguillage pour appliquer le signal de sortie du circuit (47) soit au premier circuit onduleur (31), soit au deuxième circuit onduleur (32), selon la polarité dudit signal de sortie,

4. Dispositif selon la revendication 1, 2 ou 3, caractérisé en ce que les troisièmes moyens comprennent :
   - des circuits de mesure du signe des courants circulant dans les premier et second onduleurs (31, 32)
   - un circuit de mesure des phases (58) des signaux fournis par les circuits de mesure,
   - un circuit soustracteur (59) du signal fourni par le circuit de mesure des phases (58) à un signal représentatif de la phase 90°,
   - un circuit correcteur de niveau 60, et
   - un circuit additionneur (70) du signal fourni par le circuit correcteur (70) à une valeur de référence (REF/2).

5. Dispositif selon la revendication 3, caractérisé en ce que les troisièmes moyens comprennent :
   - un circuit multiplicateur (73) de coefficient 0,5 qui est connecté à la borne de sortie du circuit correcteur de niveau (47) des deuxièmes moyens, et
   - un circuit additionneur (70) du signal fourni par le circuit multiplicateur (73) à une valeur de référence (REF/2).

**Patentansprüche**

1. Vorrichtung zur Gewinnung einer Gleichspannung mit geringer Restwelligkeit, mit einer ersten und einer zweiten Wechselrichterschaltung (31, 32), die im hyperresonanten Betrieb mit einer Frequenz arbeiten, die größer ist als die Resonanzfrequenz, mit einer ersten und einer zweiten Gleichrichter- und Filterschaltung (33, 34) und mit einem ersten und einem zweiten Transformator (TR1, TR2), um die ersten und zweiten Wechselrichterschaltungen (31, 32) mit den entsprechenden Gleichrichter- und Filterschaltungen (33, 34) zu verbinden, wobei die ersten und zweiten Gleichrichter- und Filterschaltungen (33, 34) miteinander und bezüglich der Masse verbunden sind, so daß die erste eine Spannung HT+ und die zweite eine Spannung HT- liefert, dadurch gekennzeichnet, daß die ersten und zweiten Wechselrichterschaltungen (31, 32) durch eine Steuerschaltung (35) gesteuert werden, die aufweist:
   - eine erste Anordnung (37, 38, 39, 40) zur Veränderung der Frequenz F der Umschaltsignale der ersten und zweiten Wechselrichterschaltungen, derart, daß die Summe der Absolutwerte der Spannungen HT+ und HT- konstant sind;
   - eine zweite Anordnung (43, 45 bis 50, 54) zur Veränderung der Phase der an die erste (31) oder zweite (32) Wechselrichterschaltung angelegten Umschaltsignale, derart, daß die Differenz der Absolutwerte der Spannungen HT+ und HT- null ist und
   - eine dritte Anordnung (51, 58, 59, 60, 70 oder 70, 73) zur Veränderung der Phase der an die zweite Wechselrichterschaltung angelegten Signale, derart, daß die Differenz der Phasen der in den ersten und zweiten Wechselrichterschaltungen fließenden Ströme gleich 90° ist.

2. Vorrichtung nach Anspruch 1, dadurch gekennzeichnet, daß die erste Anordnung aufweist:
   - eine Meßschaltung (R1, R2, R3, R4) für Spannungen ht+ und ht-, welche proportional zu HT+ und HT- sind,
   - eine Summierschaltung (37) der Absolutwerte der Spannungen ht+ und ht-,
   - eine Vergleicherschaltung (38) der von der Summierschaltung (37) abgegebenen Spannung mit einer Referenzspannung $ht_c$, entsprechend der Summe der zu gewinnenden Spannungen HT+ und HT-,
   - eine Pegel-Korrekturschaltung (40) und
   - eine Spannung/Frequenz-Umwandlerschaltung (39), welche ein Frequenzsignal 2F liefert.

3. Vorrichtung nach Anspruch 2, dadurch gekennzeichnet, daß die zweite Anordnung aufweist:
   - eine Subtrahierschaltung (45) für die Absolutwerte der Spannungen ht+ und ht-,
   - eine Pegel-Korrekturschaltung (47) und
   - eine Verteilschaltung, um das Ausgangssignal der Schaltung (47) entweder der ersten Wechselrichterschaltung (31) oder der zweiten Wechselrichterschaltung (32), je nach der Polarität des Ausgangssignals, zuzuführen.

4. Vorrichtung nach Anspruch 1, 2 oder 3, dadurch gekennzeichnet, daß die dritte Anordnung aufweist:
   - Meßschaltungen für das Vorzeichen der in den ersten und zweiten Wechselrichtern (31, 32) fließenden Ströme,
   - eine Phasenmeßschaltung (58) für die von den Meßschaltungen stammenden Signale,
   - eine Subtrahierschaltung (59) für das von der Phasenmeßschaltung (58) stammende Signal in ein Signal für die Phase 90°,
   - eine Pegel-Korrekturschaltung (60) und
   - eine Summierschaltung (50) für das von der Korrekturschaltung (60) stammende Signal in einen Referenzwert (REF/2).

5. Vorrichtung nach Anspruch 3, dadurch gekennzeichnet, daß die dritte Anordnung aufweist:
   - eine Vervielfachungsschaltung (73) mit dem Koeffizienten 0,5, welche mit dem Ausgangsanschluß der Pegel-Korrekturschaltung (47) der zweiten Anordnung verbunden ist und
   - eine Summierschaltung (70) für das von der Vervielfachungsschaltung (73) stammende Signal in einen Referenzwert (REF/2).

**Claims**

1. A device for obtaining a continuous voltage with low residual ripple comprising a first and a second oscillator circuit (31, 32), operating in hyper-resonant mode at a frequency F greater than the resonance frequency, a first and second rectifying and smoothing circuit (33, 34) and a first and second transformer (TR1, TR2) to connect the first and second oscillator circuits (31, 32) respectively to the first and second rectifying and smoothing circuits (33, 34), these first and second rectifying and smoothing circuits (33, 34) being connected to each other and to ground so that the first supplies a voltage HT+ and the second a voltage HT-, characterised in that the first and second oscillator circuits (31, 32) are controlled by a control circuit (35) which comprises:

- first means (37, 38, 38, 40) for varying the frequency F of the switching signals of the first (31) and second (32) oscillator circuits so that the sum of the absolute values of the voltages HT+ and HT- is constant,
- second means (43, 45 to 50, 54) for varying the phase of the switching signals applied to the first (31) or the second (32) oscillator circuit so that the difference in the absolute values of the voltages HT+ and HT- is zero, and
- third means (51, 58, 59, 60, 70 or 70, 73) for varying the phase of the signals applied to the second oscillator circuit so that the difference in the phases of the currents flowing in the first (31) and second (32) oscillator circuits is equal to 90°.

2. A device as claimed in claim 1, characterised in that the first means comprise:
   - a circuit for measuring (R1, R2, R3, R4) voltages ht+ and ht- which are proportional to HT+ and HT-,
   - a circuit (37) for adding the absolute values of voltages ht+ and ht-,
   - a circuit (38) for comparing the voltage supplied by the adder circuit with a reference voltage $ht_c$ corresponding to the sum of the voltages HT+ and HT- to be produced,
   - a level corrector circuit (40), and
   - a voltage/frequency converter circuit (39) supplying a frequency signal 2F.

3. A device as claimed in claim 2, characterised in that the second means comprise:
   - a circuit (45) for subtracting the absolute values of the voltages ht+ and ht-,
   - a level corrector circuit (47) and
   - a switching circuit to apply the output signal of circuit (47) either to the first oscillator circuit (31) or the second oscillator circuit (32), depending on the polarity of this output signal.

4. A device as claimed in claim 1, 2, or 3, characterised in that the third means comprise:
   - circuits for measuring the sign of the currents flowing in the first and second oscillators (31, 32),
   - a circuit for measuring the phases (58) of the signals supplied by the measuring circuits,
   - a circuit (59) for subtracting the signal supplied by the phase measuring circuit (58) from a signal representing the 90° phase,
   - a level corrector circuit 60, and
   - a circuit (70) for adding the signal supplied by the corrector circuit (70) to a reference value (REF/2).

5. A device as claimed in claim 3, characterised in that the third means comprise:
   - a multiplier circuit (73) with a coefficient of 0.5 which is connected to the output terminal of the level corrector circuit (47) of the second means, and
   - a circuit (70) for adding the signal supplied by the multiplier circuit (73) to a reference value (REF/2).

# FIG. 1

# FIG. 2 ART ANTERIEUR

FIG. 3

EP 0 496 679 B1

FIG. 4

FIG. 5 a

FIG. 5 b

FIG. 5 c

FIG. 5 d

FIG. 5 e

FIG. 5 f

FIG. 5 g

FIG. 5 h

FIG. 5 i

FIG. 5 j

FIG. 5 k

FIG. 5 l

FIG. 5 m